# FASCICULE DE BREVET EUROPEEN

(11) **EP 4 069 539 B1**
(45) Date de publication et mention de la délivrance du brevet: **25.10.2023**
(21) Numéro de dépôt: 20861956.9
(22) Date de dépôt: 12.11.2020
(51) Int. Cl.: B60K 6/387, B60K 6/448, B60K 6/52, B60K 17/356, B60W 10/184, B60W 30/02, B60W 10/06, B60W 10/08, B60W 20/15, B60W 20/00, B60W 50/00

(54) **VÉHICULE À CONTRÔLE DE RÉPARTITION DE COUPLE EN PRÉSENCE D'UNE INSTABILITÉ, ET PROCÉDÉ DE CONTRÔLE ASSOCIÉ**
FAHRZEUG MIT DREHMOMENTVERTEILUNGSREGELUNG BEI INSTABILITÄT UND ZUGEHÖRIGES STEUERUNGSVERFAHREN
VEHICLE WITH TORQUE DISTRIBUTION CONTROL IN THE EVENT OF INSTABILITY, AND ASSOCIATED CONTROL METHOD

(30) Priorité: 06.12.2019 FR 1913883
(43) Date de publication de la demande: 12.10.2022
(73) Titulaire: PSA Automobiles SA, 78300 Poissy (FR)
(72) Inventeur: HABBANI, Ridouane, 92600 ASNIERES SUR SEINE (FR); BARDET, Arnaud, 78150 LE CHESNAY (FR); ROCQ, Gaetan, 78125 LA BOISSIERE ECOLE (FR); BASTIANI, Philippe, 78300 POISSY (FR); MILHAU, Yohan, 78630 ORGEVAL (FR); FREIRE SUAREZ, Violette, 78150 LE CHESNAY (FR)
(86) Numéro de dépôt international: PCT/FR2020/052064
(87) Numéro de publication internationale: WO 2021/111051

(56) Documents cités:
- WO-A1-2009/131531
- FR-A1- 2 955 533
- JP-A- 2008 120 119
- US-A- 6 115 663
- US-A1- 2008 027 615

## Description

### Domaine technique de l'invention

L'invention concerne les véhicules terrestres dans lesquels on peut répartir le couple produit par un groupe motopropulseur (ou GMP) entre deux trains de roues motrices, et plus précisément le contrôle de cette répartition de couple.

### Etat de la technique

Certains véhicules terrestres comprennent un groupe motopropulseur (ou GMP) comportant des première et seconde machines motrices fournissant des couples respectivement pour des premier et second trains de roues (motrices) et un calculateur de supervision contrôlant la répartition de couple entre ces premier et second trains, un système de freinage agissant sur ces roues, et un dispositif de contrôle de trajectoire contrôlant au moins ce système de freinage.

Le dispositif de contrôle de trajectoire est chargé d'intervenir chaque fois qu'il détecte une instabilité de son véhicule, en agissant sélectivement sur les sous-parties du système de freinage qui sont associées aux différentes roues motrices, ainsi qu'éventuellement sur l'une des machines motrices et/ou un dispositif de changement de rapport. Un tel dispositif de contrôle de trajectoire peut, par exemple, être dédié à l'anti-dérapage (il est alors généralement appelé ESP (« Electronic Stability Program ») ou ESC (« Electronic Stability Control »)), ou bien à l'anti-patinage (il est alors généralement appelé ASR (« Accélération Slip Régulation ») ou TCS (« Traction Control System »)).

Lorsque le calculateur de supervision décide de modifier la répartition de couple entre les premier et second trains, cela peut parfois induire une instabilité du véhicule que le dispositif de contrôle de trajectoire doit faire disparaitre. En effet, les roues de l'un des trains peuvent se mettre à patiner et la modification de la répartition de couple peut entrainer une forte augmentation de la vitesse de rotation des roues de l'autre train. Dans cette situation, le dispositif de contrôle de trajectoire remédie assez rapidement au problème de patinage apparu en premier sur l'un des trains, puis il tente de remédier à la forte augmentation sur l'autre train (s'il y a eu un transfert de couple ou une modification de répartition) ce qui nécessite généralement beaucoup plus de temps du fait du retard accumulé.

Un problème similaire apparaît lorsque le calculateur de supervision décide de modifier la répartition de couple entre les premier et second trains alors même que le véhicule fait déjà l'objet d'une instabilité.

Actuellement, seule une optimisation de la répartition de couple entre les premier et second trains a été proposée, notamment dans les documents brevet FR-B1 2980408 et FR-A1 3078304, ou encore FR-A1-2955533 et JP-A1-2008120119. Mais cette optimisation a généralement pour seul objectif de réduire autant que possible la consommation de carburant afin de limiter les émissions de polluants et la génération de dioxyde de carbone, et non de contrôler la répartition de couple en présence d'une instabilité du véhicule.

L'invention a donc notamment pour but d'améliorer la situation.

### Présentation de l'invention

Elle propose notamment à cet effet un véhicule terrestre comprenant au moins une première machine motrice fournissant du couple pour un premier train de roues, une deuxième machine motrice fournissant du couple pour un second train de roues, un système de freinage agissant sur ces roues, un calculateur de supervision contrôlant une répartition de couple entre ces premier et second trains, et un dispositif de contrôle de trajectoire contrôlant ce système de freinage.

Ce véhicule terrestre se caractérise par le fait qu'en cas de détection d'une instabilité du véhicule le dispositif de contrôle de trajectoire ordonne au calculateur de supervision de maintenir en l'état la répartition de couple en cours et contrôle le système de freinage jusqu'à ce que l'instabilité ait disparu, puis autorise le calculateur de supervision à effectuer une modification de répartition de couple.

Grâce à l'invention, le dispositif de contrôle de trajectoire peut désormais agir en temps réel sans que l'instabilité détectée ne soit modifiée par une modification de répartition de couple décidée par le calculateur de supervision.

Le véhicule terrestre selon l'invention peut comporter d'autres caractéristiques qui peuvent être prises séparément ou en combinaison, et notamment :
- en cas de détection d'une instabilité du véhicule consécutive à une modification en cours de la répartition de couple, le dispositif de contrôle de trajectoire peut déterminer si la modification peut être poursuivie, et dans la négative il peut ordonner au calculateur de supervision de maintenir en l'état la répartition de couple en cours, tandis que dans l'affirmative il peut déterminer une valeur représentative d'une modification pouvant encore être faite en fonction d'une variation d'adhérence estimée entre les roues, puis peut ordonner au calculateur de supervision d'instaurer une modification de la répartition de couple en cours définie par cette valeur déterminée, et dans la négative comme dans l'affirmative il peut contrôler le système de freinage jusqu'à ce que l'instabilité ait disparu ;
- en cas de détection d'une instabilité du véhicule en l'absence de modification de la répartition de couple en cours, le dispositif de contrôle de trajectoire peut ordonner au calculateur de supervision de maintenir la répartition de couple en cours et peut contrôler le système de freinage jusqu'à ce que l'instabilité ait disparu, puis peut autoriser le calculateur de supervision à effectuer une modification de la répartition de couple en cours ;
- la première machine motrice peut être un moteur thermique ;
- il peut comprendre une troisième machine motrice fournissant du couple pour le premier train de roues ;
- la troisième machine motrice peut être une machine électrique alimentée en énergie électrique par une batterie rechargeable ;
- la deuxième machine motrice peut être une machine électrique alimentée en énergie électrique par une batterie rechargeable ;
- il peut être de type automobile.

L'invention propose également un procédé de contrôle destiné à être mis en oeuvre dans un véhicule terrestre comprenant au moins une première machine motrice fournissant du couple pour un premier train de roues, une deuxième machine motrice fournissant du couple pour un second train de roues, un système de freinage agissant sur ces roues, un calculateur de supervision contrôlant une répartition de couple entre les premier et second trains, et un dispositif de contrôle de trajectoire contrôlant ce système de freinage.

Ce procédé de contrôle se caractérise par le fait qu'il comprend une étape dans laquelle, en cas de détection d'une instabilité du véhicule, le dispositif de contrôle de trajectoire ordonne au calculateur de supervision de maintenir en l'état la répartition de couple en cours et contrôle le système de freinage jusqu'à ce que l'instabilité ait disparu, puis autorise le calculateur de supervision à effectuer une modification de répartition de couple.

L'invention propose également un produit programme d'ordinateur comprenant un jeu d'instructions qui, lorsqu'il est exécuté par des moyens de traitement, est propre à mettre en oeuvre un procédé de contrôle du type de celui présenté ci-avant pour contrôler une répartition de couple entre des premier et second trains de roues d'un véhicule terrestre comprenant au moins une première machine motrice fournissant du couple pour le premier train, une deuxième machine motrice fournissant du couple pour le second train, un système de freinage agissant sur ces roues, un calculateur de supervision contrôlant la répartition de couple, et un dispositif de contrôle de trajectoire contrôlant le système de freinage.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement, dans une vue de dessus, un exemple de réalisation d'un véhicule terrestre selon l'invention,
[Fig. 2] illustre schématiquement et fonctionnellement un exemple de réalisation d'un dispositif de contrôle de trajectoire, et

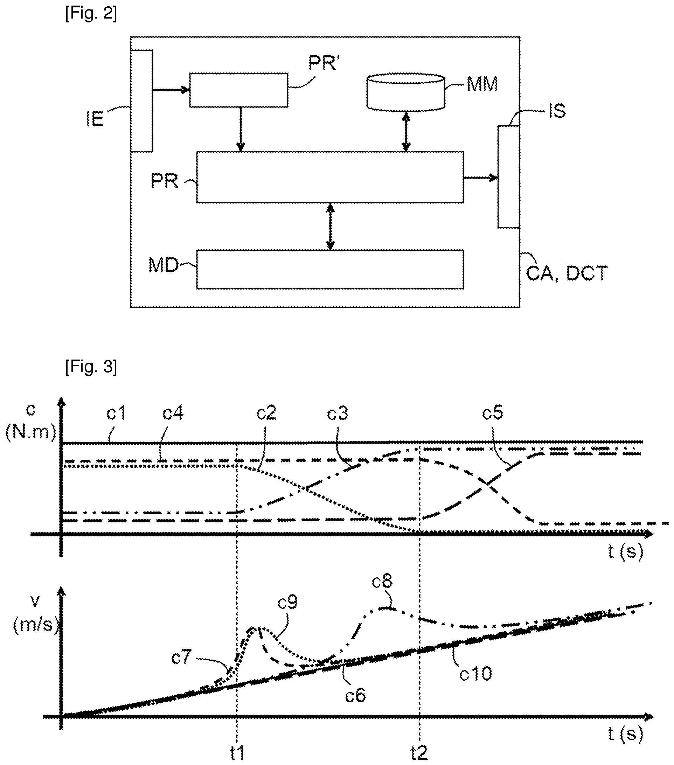

[Fig. 3] illustre schématiquement dans la partie supérieure un premier exemple de diagramme d'évolution temporelle du couple demandé par le conducteur (c1), du couple sur le train avant en l'absence de l'invention (c2), du couple sur le train arrière en l'absence de l'invention (c3), du couple sur le train avant en présence de l'invention (c4), et du couple sur le train arrière en présence de l'invention (c5), et dans la partie inférieure un premier exemple de diagramme d'évolution temporelle de la vitesse du véhicule (c6), de la vitesse des roues avant en l'absence de l'invention (c7), de la vitesse des roues arrière en l'absence de l'invention (c8), de la vitesse des roues avant en présence de l'invention (c9), et de la vitesse des roues arrière en présence de l'invention (c10), dans le cas de la situation définie par le premier exemple de diagramme,

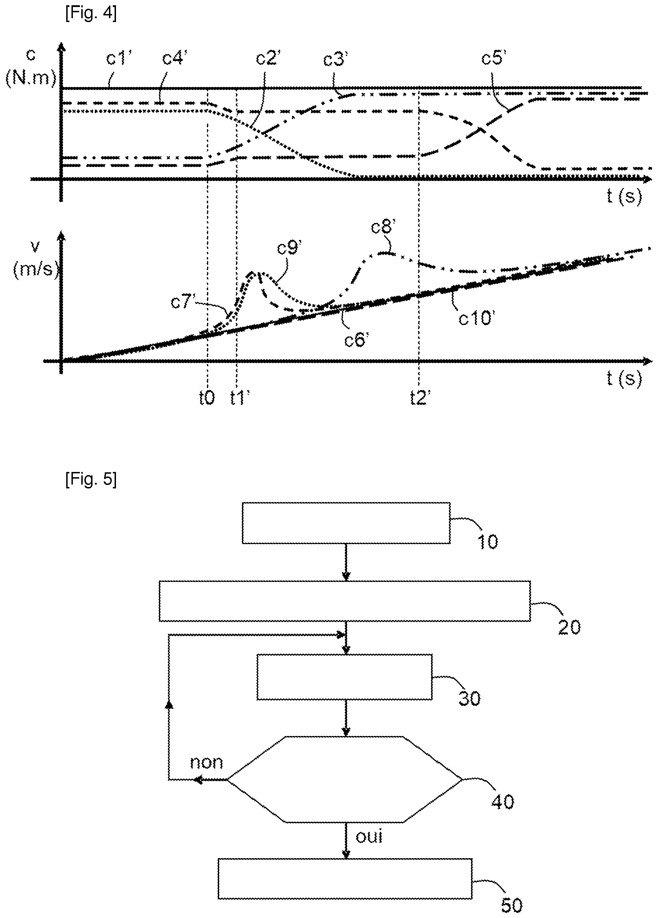

[Fig. 4] illustre schématiquement dans la partie supérieure un second exemple de diagramme d'évolution temporelle du couple demandé par le conducteur (c1'), du couple sur le train avant en l'absence de l'invention (c2'), du couple sur le train arrière en l'absence de l'invention (c3'), du couple sur le train avant en présence de l'invention (c4'), et du couple sur le train arrière en présence de l'invention (c5'), et dans la partie inférieure un second exemple de diagramme d'évolution temporelle de la vitesse du véhicule (c6'), de la vitesse des roues avant en l'absence de l'invention (c7'), de la vitesse des roues arrière en l'absence de l'invention (c8'), de la vitesse des roues avant en présence de l'invention (c9'), et de la vitesse des roues arrière en présence de l'invention (c10'), dans le cas de la situation définie par le second exemple de diagramme, et
[Fig. 5] illustre schématiquement un exemple d'algorithme mettant en oeuvre un procédé de contrôle selon l'invention.

### Description détaillée de l'invention

L'invention a notamment pour but de proposer un véhicule terrestre V comprenant un groupe motopropulseur (ou GMP) comportant au moins des première MM1 et deuxième MM2 machines motrices fournissant des couples respectivement pour des premier T1 et second T2 trains de roues (motrices), et dans lequel on peut contrôler la répartition de couple en présence d'une instabilité.

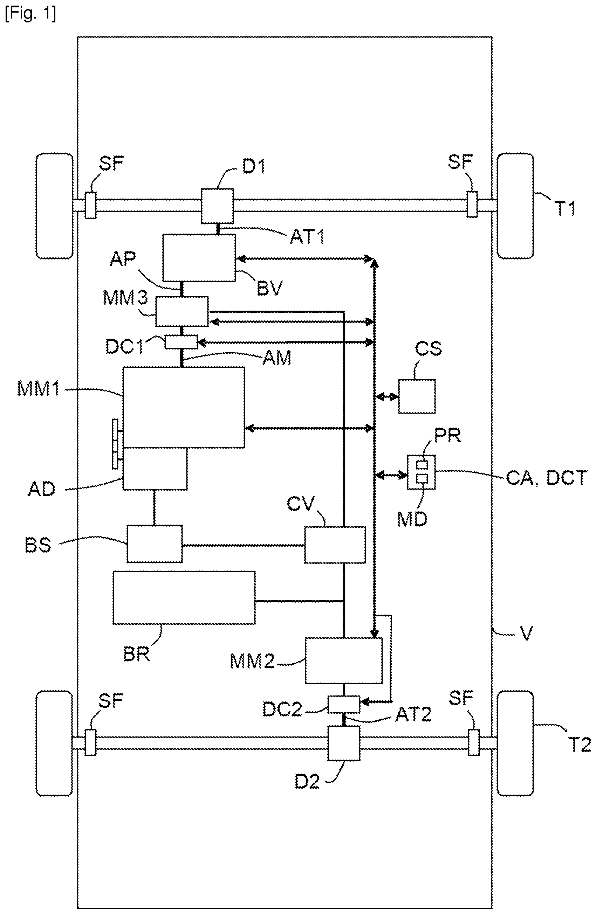

Dans ce qui suit, on considère, à titre d'exemple non limitatif, que le véhicule terrestre V est de type automobile. Il s'agit par exemple d'une voiture, comme illustré sur la figure 1. Mais l'invention n'est pas limitée à ce type de véhicule. Elle concerne en effet tout type de véhicule terrestre comprenant un groupe motopropulseur (ou GMP) comportant au moins des première et seconde machines motrices fournissant des couples respectivement pour des premier et second trains de roues (motrices). Ainsi, elle concerne aussi les véhicules utilitaires, les camping-cars, les minibus, les cars, les camions, les motocyclettes, les engins de voirie, les engins de chantier, les engins agricoles, les engins de loisir (motoneige, kart), les engins à chenille(s), et les engins d'exploration à équipage, par exemple.

On entend ici par « machine motrice » une machine produisant du couple pour les déplacements de son véhicule à partir de l'énergie stockée dans un moyen de stockage d'énergie. Une telle machine motrice peut donc être thermique ou non-thermique. Une machine motrice thermique est un moteur consommant du carburant ou des produits chimiques, comme par exemple un réacteur, un turboréacteur ou un moteur chimique. Une machine motrice non-thermique peut, par exemple, être une machine (ou un moteur) électrique, une machine hydraulique, une machine pneumatique (ou à air comprimé), ou un volant d'inertie.

Par ailleurs, on considère dans ce qui suit, à titre d'exemple non limitatif, que le groupe motopropulseur (ou GMP) est de type hybride. Mais le GMP pourrait être de type tout électrique.

On a schématiquement représenté sur la figure 1 un véhicule V, selon l'invention, comprenant une chaîne de transmission (ici à GMP hybride), un calculateur de supervision CS propre à superviser (ou gérer) le fonctionnement de la chaîne de transmission, un système de freinage SF, et un dispositif de contrôle de trajectoire DCT.

La chaîne de transmission comprend ici, notamment, une première machine motrice MM1, un arbre moteur AM, un premier dispositif de couplage DC1, un dispositif de changement de rapport BV, un premier arbre de transmission AT1, une deuxième machine motrice MM2, un second dispositif de couplage DC2, un second arbre de transmission AT2, un moyen de stockage d'énergie BR, et une optionnelle troisième machine motrice MM3.

Il est important de noter que pour la mise en oeuvre de l'invention le GMP du véhicule V peut ne pas comprendre une troisième machine motrice MM3.

On considère ici que la première machine motrice MM1 est un moteur thermique. Mais il pourrait s'agir d'une machine motrice non-thermique (éventuellement électrique).

Par ailleurs, on considère ici que la deuxième machine motrice MM2 est non-thermique, et plus précisément de type électrique. Mais il pourrait s'agir d'une machine motrice thermique ou d'une machine motrice non-thermique autre qu'électrique.

La première machine motrice MM1 comprend un vilebrequin (non représenté) qui est solidarisé fixement à l'arbre moteur AM afin d'entraîner ce dernier (AM) en rotation. Cette première machine motrice MM1 est destiné à fournir du couple, sur ordre du calculateur de supervision CS, pour un premier train T1 de roues motrices, via le premier dispositif de couplage DC1, l'optionnelle troisième machine motrice MM3, et le dispositif de changement de rapport BV.

Par exemple, le premier train T1 est situé à l'avant du véhicule V, et de préférence, et comme illustré, couplé au premier arbre de transmission AT1 via un premier différentiel (ici avant) D1. Mais dans une variante ce premier train T1 pourrait être celui référencé T2 qui est situé à l'arrière du véhicule V.

Par exemple, le premier dispositif de couplage DC1 peut être un embrayage. Mais il pourrait aussi s'agir d'un convertisseur de couple ou d'un crabot.

Le dispositif de changement de rapport BV peut, par exemple, être agencé sous la forme d'une boîte de vitesses. Il comprend un arbre primaire (ou d'entrée) AP destiné à recevoir du couple, et un arbre secondaire (ou de sortie) destiné à recevoir ce couple via l'arbre primaire AP afin de le communiquer au premier arbre de transmission AT1 auquel il est couplé et qui est couplé indirectement à des roues motrices (ici avant) du véhicule V via le premier différentiel D1. Mais dans une variante de réalisation le dispositif de changement de rapport BV pourrait, par exemple, comprendre au moins un train épicycloïdal comprenant un, deux ou trois synchronisateurs. D'une manière générale, tout type de boîte de vitesses peut ici constituer un dispositif de changement de rapport BV.

La deuxième machine motrice MM2 est ici de type électrique (ce qui n'est pas obligatoire). Elle est chargée de produire du couple sur ordre du calculateur de supervision CS, à partir de l'énergie qui est stockée dans le moyen de stockage d'énergie BR, pour le second train T2 de roues motrices, lorsqu'elle est couplée à ce dernier (T2) via le second dispositif de couplage DC2.

Par exemple, le second train T2 est situé à l'arrière du véhicule V, et couplé au second arbre de transmission AT2, de préférence, et comme illustré, via un second différentiel (ici arrière) D2. Mais dans la variante précitée ce second train T2 pourrait être situé à l'avant du véhicule V.

Le second dispositif de couplage DC2 peut, par exemple, être un crabot. Mais il pourrait aussi s'agir d'un embrayage.

Compte tenu du choix mentionné plus haut, le moyen de stockage d'énergie BR est ici agencé pour stocker de l'énergie électrique. Il s'agit donc, ici, d'une batterie rechargeable, par exemple de type basse tension (typiquement 220 V ou 400 V ou encore 600 V).

La troisième machine motrice MM3, optionnelle, est non-thermique. Par exemple, elle peut être de type électrique. Elle est chargée de produire du couple sur ordre du calculateur de supervision CS, à partir de l'énergie qui est stockée dans un moyen de stockage d'énergie (ici BR), pour le premier train T1 de roues motrices, lorsqu'elle est couplée à ce dernier (T1) via le dispositif de changement de rapport BV.

On notera également, comme illustré non limitativement sur la figure 1, que la chaîne de transmission comprend ici un démarreur ou un alterno-démarreur AD couplé à la première machine motrice MM1 et chargé de lancer ce dernier (MM1) afin de lui permettre de démarrer. Ce lancement se fait grâce à de l'énergie électrique qui est, par exemple et comme illustré non limitativement, stockée dans une batterie de servitude BS. Cette dernière (BS) peut être, par exemple, de type très basse tension (typiquement 12 V, 24 V ou 48V). Elle (BS) peut, par exemple, alimenter un réseau de bord auquel sont connectés des équipements électriques du véhicule V. On notera que la batterie de servitude BS peut, comme illustré non limitativement, être couplée à la batterie rechargeable BR et à la deuxième machine motrice MM2 via un convertisseur CV de type DC/DC, afin de pouvoir être rechargée.

Les fonctionnements des première MM1, deuxième MM2 et troisième MM3 machines motrices, des premier DC1 et second DC2 dispositifs de couplage, et du dispositif de changement de rapport BV, peuvent être contrôlés par le calculateur de supervision CS.

Ce calculateur de supervision CS est notamment agencé de manière à contrôler la répartition de couple entre les premier T1 et second T2 trains.

Le dispositif de contrôle de trajectoire DCT est notamment agencé de manière à contrôler le système de freinage SF, et en particulier chaque sous-partie associée à une roue, de façon sélective, lorsqu'il détecte une instabilité du véhicule V. Cette détection est effectuée à partir d'informations qui sont mesurées (ou estimées) par des capteurs, et plus précisément par des capteurs associés aux roues et mesurant leur vitesse de rotation en cours, un capteur d'accélération transversale, un capteur fournissant la vitesse en cours du véhicule, un capteur de lacet, et un capteur associé au volant du véhicule V et mesurant son angle de rotation.

De plus, le dispositif de contrôle de trajectoire DCT est agencé, lorsqu'il détecte une instabilité du véhicule V, de manière à ordonner au calculateur de supervision CS de maintenir en l'état la répartition de couple en cours et à contrôler le système de freinage SF jusqu'à ce que l'instabilité ait disparu. Puis, une fois qu'il a constaté que l'instabilité a disparu, le dispositif de contrôle de trajectoire DCT est agencé de manière à autoriser le calculateur de supervision CS à effectuer une modification de répartition de couple (s'il le veut).

Ainsi, le dispositif de contrôle de trajectoire DCT peut désormais temporairement « prendre la main » en matière de répartition de couple pour supprimer une instabilité de son véhicule V par une action sur le système de freinage destiné à permettre un accostage tangentiel du régime de l'une des machines motrices MM1 à MM3 pour éviter le choc d'une roue qui colle ou une reprise d'adhérence violente. En effet, cela permet au dispositif de contrôle de trajectoire DCT de pouvoir agir en temps réel sans que l'instabilité détectée ne soit modifiée par une modification de répartition de couple décidée par le calculateur de supervision CS. Par ailleurs, lorsque les roues de l'un des trains (T1 ou T2) se mettent à patiner on ne risque plus d'avoir une forte augmentation de la vitesse de rotation des roues de l'autre train (T2 ou T1). En fait, comme on le verra plus loin il n'y a plus de très forte augmentation de la vitesse de rotation des roues de l'autre train.

On notera que dans l'exemple de GMP illustré non limitativement sur la figure 1, on peut désormais « figer » (ou maintenir en l'état) la répartition de couple entre les premier T1 et second T2 trains en mode tout électrique (moteur thermique MM1 éteint), et pas seulement en mode hybride.

On notera également qu'en cas de détection d'une instabilité du véhicule V en l'absence de modification de la répartition de couple en cours, le dispositif de contrôle de trajectoire DCT peut être agencé de manière à ordonner au calculateur de supervision CS de maintenir la répartition de couple en cours et à contrôler le système de freinage SF jusqu'à ce que cette instabilité ait disparu, puis à autoriser le calculateur de supervision CS à effectuer une modification de la répartition de couple en cours (s'il le veut).

On a schématiquement illustré sur la figure 3 deux premiers exemples de diagramme correspondant à une situation dans laquelle le dispositif de contrôle de trajectoire DCT détecte une instabilité du véhicule V en l'absence, initialement, de modification de la répartition de couple.

Le diagramme situé dans la partie supérieure de la figure 3 illustre un premier exemple d'évolution temporelle :
- du couple, ici constant, demandé par le conducteur du véhicule V (courbe c1),
- du couple sur le premier train (avant) T1 en l'absence de l'invention (courbe c2),
- du couple sur le second train (arrière) T2 en l'absence de l'invention (courbe c3),
- du couple sur le premier train (avant) T1 en présence de l'invention (courbe c4), et
- du couple sur le second train (arrière) T2 en présence de l'invention (courbe c5).

Le diagramme situé dans la partie inférieure de la figure 3 illustre un premier exemple d'évolution temporelle :
- de la vitesse du véhicule (courbe c6),
- de la vitesse des roues avant (de T1) en l'absence de l'invention (courbe c7),
- de la vitesse des roues arrière (de T2) en l'absence de l'invention (courbe c8),
- de la vitesse des roues avant (de T1) en présence de l'invention (courbe c9), et
- de la vitesse des roues arrière (de T2) en présence de l'invention (c10).

En l'absence de l'invention, à l'instant t1, le dispositif de contrôle de trajectoire DCT détecte une instabilité du véhicule V (forte croissance de la vitesse des roues avant (de T1) (courbe c7) par rapport à la vitesse du véhicule V (courbe c6)) et donc commence à agir sur le système de frein SF pour supprimer la forte croissance de la vitesse des roues avant (de T1) (courbe c7).

Dans le même temps, le calculateur de supervision CS impose, ici, une modification de la répartition de couple en cours. L'action du dispositif de contrôle de trajectoire DCT sur le système de frein SF fait très vite converger la vitesse des roues avant (de T1) (courbe c7) vers la vitesse du véhicule V (courbe c6), mais la modification de la répartition de couple induit une très forte croissance de la vitesse des roues arrière (de T2) (courbe c8) par rapport à la vitesse du véhicule V (courbe c6) à laquelle le dispositif de contrôle de trajectoire DCT ne peut répondre qu'avec un retard (après avoir réglé le problème sur le premier train (avant) T1), ce qui lui prend beaucoup de temps.

En présence de l'invention, à l'instant t1, le dispositif de contrôle de trajectoire DCT détecte l'instabilité du véhicule V et donc ordonne au calculateur de supervision CS de maintenir la répartition de couple en cours (courbes c4 et c5 constantes entre t1 et t2) et agit sur le système de frein SF pour supprimer la forte croissance de la vitesse des roues avant (de T1) (courbe c9) par rapport à la vitesse du véhicule V (courbe c6). A l'instant t2, le dispositif de contrôle de trajectoire DCT s'aperçoit que l'instabilité a disparu et donc autorise le calculateur de supervision CS à effectuer une modification de la répartition de couple en cours (s'il le veut). Ici, juste après l'instant t2 le calculateur de supervision CS décide d'effectuer une modification de la répartition de couple en cours (décroissance du couple sur le premier train (avant) T1 (courbe c4) et croissance du couple sur le second train (arrière) T2 (courbe c5)) induisant une augmentation identique des vitesses des roues avant (de T1) (courbe c9) et des roues arrière (de T2) (courbe c10) et égale à celle de la vitesse du véhicule V (courbe c6), mais pas de nouvelle instabilité.

On notera également qu'en cas de détection d'une instabilité du véhicule V consécutive à une modification en cours de la répartition de couple, le dispositif de contrôle de trajectoire DCT peut être agencé de manière à déterminer si la modification peut être poursuivie. Dans la négative (et donc si la modification en cours ne peut pas être poursuivie), le dispositif de contrôle de trajectoire DCT ordonne au calculateur de supervision CS de maintenir en l'état la répartition de couple en cours. En revanche, dans l'affirmative (et donc si la modification en cours peut être poursuivie), le dispositif de contrôle de trajectoire DCT peut déterminer une valeur représentative de la modification qui peut encore être faite en fonction d'une variation d'adhérence estimée entre les roues (le dispositif de contrôle de trajectoire DCT peut estimer l'adhérence et limiter le couple sur les essieux de façon préventive). Puis, dans la négative comme dans l'affirmative le dispositif de contrôle de trajectoire DCT ordonne au calculateur de supervision CS d'instaurer une modification de la répartition de couple en cours qui est définie par cette valeur déterminée et contrôle le système de freinage SF jusqu'à ce que l'instabilité ait disparu.

On a schématiquement illustré sur la figure 4 deux seconds exemples de diagramme correspondant à une situation dans laquelle le dispositif de contrôle de trajectoire DCT détecte une instabilité du véhicule V provoquée (ou amplifiée) par une modification en cours de la répartition de couple décidée par le calculateur de supervision CS.

Le diagramme situé dans la partie supérieure de la figure 4 illustre un second exemple d'évolution temporelle :
- du couple, ici constant, demandé par le conducteur du véhicule V (courbe c1'),
- du couple sur le premier train (avant) T1 en l'absence de l'invention (courbe c2'),
- du couple sur le second train (arrière) T2 en l'absence de l'invention (courbe c3'),
- du couple sur le premier train (avant) T1 en présence de l'invention (courbe c4'), et
- du couple sur le second train (arrière) T2 en présence de l'invention (courbe c5').

Le diagramme situé dans la partie inférieure de la figure 4 illustre un second exemple d'évolution temporelle :
- de la vitesse du véhicule (courbe c6'),
- de la vitesse des roues avant (de T1) en l'absence de l'invention (courbe c7'),
- de la vitesse des roues arrière (de T2) en l'absence de l'invention (courbe c8'),
- de la vitesse des roues avant (de T1) en présence de l'invention (courbe c9'), et
- de la vitesse des roues arrière (de T2) en présence de l'invention (c10').

En l'absence de l'invention, à l'instant t0 le calculateur de supervision CS commence à modifier la répartition de couple en cours. A l'instant t1', le dispositif de contrôle de trajectoire DCT détecte une instabilité du véhicule V (forte croissance de la vitesse des roues avant (de T1) (courbe c7') par rapport à la vitesse du véhicule V (courbe c6')) en présence du début de modification de la répartition de couple, et donc commence à agir sur le système de frein SF pour supprimer la forte croissance de la vitesse des roues avant (de T1) (courbe c7'). L'action du dispositif de contrôle de trajectoire DCT sur le système de frein SF fait très vite converger la vitesse des roues avant (de T1) (courbe c7') vers la vitesse du véhicule V (courbe c6'), mais la modification de la répartition de couple induit une très forte croissance de la vitesse des roues arrière (de T2) (courbe c8') par rapport à la vitesse du véhicule V (courbe c6') à laquelle le dispositif de contrôle de trajectoire DCT ne peut répondre qu'avec un retard (après avoir réglé le problème sur le premier train (avant) T1), ce qui lui prend beaucoup de temps.

En présence de l'invention, à l'instant t1', le dispositif de contrôle de trajectoire DCT détecte l'instabilité du véhicule V en présence du début de modification de la répartition de couple et donc détermine si cette modification peut être poursuivie. On considère ici que cette poursuite n'est pas possible. Par conséquent, juste après l'instant t1' le dispositif de contrôle de trajectoire DCT ordonne au calculateur de supervision CS de maintenir en l'état la répartition de couple en cours (les courbes c4' et c5' deviennent alors constantes entre t1' et t2'). Dans le même temps, le dispositif de contrôle de trajectoire DCT agit sur le système de frein SF pour supprimer la forte croissance de la vitesse des roues avant (de T1) (courbe c9') par rapport à la vitesse du véhicule V (courbe c6'). L'action du dispositif de contrôle de trajectoire DCT sur le système de frein SF fait très vite converger la vitesse des roues avant (de T1) (courbe c9') vers la vitesse du véhicule V (courbe c6'). A l'instant t2', le dispositif de contrôle de trajectoire DCT s'aperçoit que l'instabilité a disparu et donc autorise le calculateur de supervision CS à effectuer une (ou poursuivre la) modification de la répartition de couple. Ici, juste après l'instant t2' le calculateur de supervision CS décide de poursuivre la modification de la répartition de couple qu'il avait débutée à l'instant t0 (décroissance du couple sur le premier train (avant) T1 (courbe c4') et croissance du couple sur le second train (arrière) T2 (courbe c5')). Cela induit une augmentation identique des vitesses des roues avant (de T1) (courbe c9') et des roues arrière (de T2) (courbe c10') et égale à celle de la vitesse du véhicule V (courbe c6'), mais pas de nouvelle instabilité.

Le dispositif de contrôle de trajectoire DCT comprend au moins un calculateur CA comprenant au moins un processeur PR, par exemple de signal numérique (ou DSP (« Digital Signal Processor »)), et au moins une mémoire MD effectuant les opérations précitées. Le processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. La mémoire MD est vive afin de stocker des instructions pour la mise en oeuvre par le processeur PR d'une partie au moins du procédé de contrôle décrit plus loin. Le calculateur CA peut donc être réalisé sous la forme d'une combinaison de circuits ou composants électriques ou électroniques (ou « hardware ») et de modules logiciels (ou « software »).

On notera que dans l'exemple illustré non limitativement sur la figure 1 le dispositif de contrôle de trajectoire DCT est externe au calculateur de supervision CS tout en étant couplé à ce dernier (CS), directement ou indirectement (par exemple via un réseau de communication interne, éventuellement de type multiplexé). Mais dans une variante de réalisation il pourrait faire partie du calculateur de supervision CS.

On notera également, comme illustré non limitativement sur la figure 2, que le calculateur CA peut aussi comprendre (en complément de sa mémoire vive MD et de son processeur PR), une mémoire de masse MM, notamment pour le stockage de la répartition de couple décidée par le calculateur de supervision CS, des valeurs en cours des vitesses du véhicule V et des roues avant et arrière, du lacet, de l'accélération transversale et de la rotation du volant, et de données intermédiaires intervenant dans tous ses calculs et traitements. Par ailleurs, le calculateur CA peut aussi comprendre une interface d'entrée IE pour la réception d'au moins la répartition de couple décidée par le calculateur de supervision CS, les valeurs en cours des vitesses du véhicule V et des roues avant et arrière, du lacet, de l'accélération transversale et de la rotation du volant, pour les utiliser dans des calculs ou traitements, éventuellement après les avoir mises en forme et/ou démodulées et/ou amplifiées, de façon connue en soi, au moyen d'un processeur de signal numérique PR'. De plus, le calculateur CA peut aussi comprendre une interface de sortie IS, notamment pour délivrer ses messages et ordres (au moins pour le système de freinage SF et le calculateur de supervision CS).

L'invention peut aussi être considérée sous la forme d'un procédé de contrôle destiné à être mis en oeuvre dans le véhicule V. Ce procédé de contrôle peut être mis en oeuvre au moins partiellement par le dispositif de contrôle de trajectoire DCT décrit ci-avant.

Ce procédé de contrôle comprend une étape 10-50 dans laquelle, en cas de détection d'une instabilité du véhicule V, le dispositif de contrôle de trajectoire DCT commence par ordonner au calculateur de supervision CS de maintenir en l'état la répartition de couple en cours et contrôle le système de freinage SF jusqu'à ce que l'instabilité ait disparu. Puis, le dispositif de contrôle de trajectoire DCT autorise le calculateur de supervision CS à effectuer une modification de répartition de couple (s'il le veut).

On a schématiquement illustré sur la figure 5 un exemple d'algorithme mettant en oeuvre un procédé de contrôle selon l'invention.

L'algorithme comprend une sous-étape 10 dans laquelle le dispositif de contrôle de trajectoire DCT détecte une instabilité du véhicule V.

Puis, dans une sous-étape 20, le dispositif de contrôle de trajectoire DCT ordonne au calculateur de supervision CS de maintenir en l'état la répartition de couple en cours.

Puis, dans une sous-étape 30, le dispositif de contrôle de trajectoire DCT commence à contrôler le système de freinage SF pour faire disparaitre l'instabilité.

Tant que le dispositif de contrôle de trajectoire DCT constate dans une sous-étape 40 que l'instabilité n'a pas disparu, il retourne effectuer la sous-étape 30. En revanche, lorsque le dispositif de contrôle de trajectoire DCT s'aperçoit dans une sous-étape 40 que l'instabilité a disparu, il autorise dans une sous-étape 50 le calculateur de supervision CS à effectuer une modification de répartition de couple (s'il le veut).

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de contrôle décrit ci-avant pour contrôler la répartition de couple entre les premier T1 et second T2 trains de roues du véhicule V.

On notera également qu'une ou plusieurs sous-étapes de l'étape du procédé de contrôle peuvent être effectuées par des composants différents. Ainsi, le procédé de contrôle peut-être mis en oeuvre par une pluralité de processeurs de signal numérique, mémoire vive, mémoire de masse, interface d'entrée, interface de sortie.

## Revendications

1. Véhicule terrestre (V) comprenant au moins une première machine motrice (MM1) fournissant du couple pour un premier train (T1) de roues, une deuxième machine motrice (MM2) fournissant du couple pour un second train (T2) de roues, un système de freinage (SF) agissant sur lesdites roues, un calculateur de supervision (CS) contrôlant une répartition de couple entre lesdits premier (T1) et second (T2) trains, et un dispositif de contrôle de trajectoire (DCT) contrôlant ledit système de freinage (SF), **caractérisé en ce qu'**en cas de détection d'une instabilité dudit véhicule (V) ledit dispositif de contrôle de trajectoire (DCT) ordonne audit calculateur de supervision (CS) de maintenir en l'état la répartition de couple en cours et contrôle ledit système de freinage (SF) jusqu'à ce que ladite instabilité ait disparu, puis autorise ledit calculateur de supervision (CS) à effectuer une modification de répartition de couple.

2. Véhicule selon la revendication 1, **caractérisé en ce qu'**en cas de détection d'une instabilité dudit véhicule (V) consécutive à une modification en cours de ladite répartition de couple, ledit dispositif de contrôle de trajectoire (DCT) détermine si ladite modification peut être poursuivie, et dans la négative il ordonne audit calculateur de supervision (CS) de maintenir en l'état la répartition de couple en cours, tandis que dans l'affirmative il détermine une valeur représentative d'une modification pouvant encore être faite en fonction d'une variation d'adhérence estimée entre lesdites roues, puis ordonne audit calculateur de supervision (CS) d'instaurer une modification de ladite répartition de couple en cours définie par ladite valeur déterminée, et dans la négative comme dans l'affirmative il contrôle ledit système de freinage (SF) jusqu'à ce que ladite instabilité ait disparu.

3. Véhicule selon la revendication 1 ou 2, **caractérisé en ce qu'**en cas de détection d'une instabilité dudit véhicule (V) en l'absence de modification de la répartition de couple en cours, ledit dispositif de contrôle de trajectoire (DCT) ordonne audit calculateur de supervision (CS) de maintenir ladite répartition de couple en cours et contrôle ledit système de freinage (SF) jusqu'à ce que ladite instabilité ait disparu, puis autorise ledit calculateur de supervision (CS) à effectuer une modification de ladite répartition de couple en cours.

4. Véhicule selon l'une des revendications 1 à 3, **caractérisé en ce que** ladite première machine motrice (MM1) est un moteur thermique.

5. Véhicule selon la revendication 4, **caractérisé en ce qu'**il comprend une troisième machine motrice (MM3) fournissant du couple pour ledit premier train (T1) de roues.

6. Véhicule selon la revendication 5, **caractérisé en ce que** ladite troisième machine motrice (MM3) est une machine électrique alimentée en énergie électrique par une batterie rechargeable (BR).

7. Véhicule selon l'une des revendications 1 à 6, **caractérisé en ce que** ladite deuxième machine motrice (MM2) est une machine électrique alimentée en énergie électrique par une batterie rechargeable (BR).

8. Procédé de contrôle pour un véhicule terrestre (V) comprenant au moins une première machine motrice (MM1) fournissant du couple pour un premier train (T1) de roues, une deuxième machine motrice (MM2) fournissant du couple pour un second train (T2) de roues, un système de freinage (SF) agissant sur lesdites roues, un calculateur de supervision (CS) contrôlant une répartition de couple entre lesdits premier (T1) et second (T2) trains, et un dispositif de contrôle de trajectoire (DCT) contrôlant ledit système de freinage (SF), **caractérisé en ce qu'**il comprend une étape (10-50) dans laquelle, en cas de détection d'une instabilité dudit véhicule (V), ledit dispositif de contrôle de trajectoire (DCT) ordonne audit calculateur de supervision (CS) de maintenir en l'état la répartition de couple en cours et contrôle ledit système de freinage (SF) jusqu'à ce que ladite instabilité ait disparu, puis autorise ledit calculateur de supervision (CS) à effectuer une modification de répartition de couple.

9. Produit programme d'ordinateur comprenant un jeu d'instructions qui, lorsqu'il est exécuté par des moyens de traitement, est propre à mettre en oeuvre le procédé de contrôle selon la revendication 8 pour contrôler une répartition de couple entre des premier (T1) et second (T2) trains de roues d'un véhicule terrestre (V) comprenant au moins une première machine motrice (MM1) fournissant du couple pour ledit premier train (T1), une deuxième machine motrice (MM2) fournissant du couple pour ledit second train (T2), un système de freinage (SF) agissant sur lesdites roues, un calculateur de supervision (CS) contrôlant ladite répartition de couple, et un dispositif de contrôle de trajectoire (DCT) contrôlant ledit système de freinage (SF).

## Patentansprüche

1. Landfahrzeug (V), umfassend mindestens eine erste Antriebsmaschine (MM1), die Drehmoment für einen ersten Radsatz (T1) liefert, eine zweite Antriebsmaschine (MM2), die Drehmoment für einen zweiten Radsatz (T2) liefert, ein System (SF ) auf die Räder einwirkt, einen Überwachungscomputer (CS), der eine Drehmomentverteilung zwischen dem ersten (T1) und dem zweiten (T2) Zug steuert, und eine Flugbahnsteuervorrichtung (DCT), die das Bremssystem (SF) steuert, **dadurch gekennzeichnet, dass** in Im Falle der Erkennung einer Instabilität des Fahrzeugs (V) weist das Flugbahnkontrollgerät (DCT) den Überwachungscomputer (CS) an, die Drehmomentverteilung in Fahrten aufrechtzuerhalten, und steuert das Bremssystem (SF), bis die Instabilität verschwunden ist, und genehmigt dann wobei der Überwachungscomputer (CS) eine Änderung der Drehmomentverteilung durchführt.

2. Fahrzeug nach Anspruch 1, **dadurch gekennzeichnet, dass** im Falle der Erkennung einer Instabilität des Fahrzeugs (V) nach einer laufenden Änderung der Drehmomentverteilung die Flugbahnsteuervorrichtung (DCT) bestimmt, ob die Änderung fortgesetzt werden kann, und wenn nicht, weist er den Überwachungscomputer (CS) an, die aktuelle Drehmomentverteilung so beizubehalten, wie sie ist, während er, wenn ja, einen Wert bestimmt, der für eine Änderung repräsentativ ist, die dann noch vorgenommen werden kann, abhängig von einer geschätzten Kraftschlussschwankung zwischen den Rädern weist den Überwachungscomputer (CS) an, eine Änderung der aktuellen Drehmomentverteilung vorzunehmen, die durch den ermittelten Wert definiert ist, und prüft im negativen wie im positiven Fall das Bremssystem (SF), bis die Instabilität verschwunden ist.

3. Fahrzeug nach Anspruch 1 oder 2, **dadurch gekennzeichnet, dass** im Falle der Erkennung einer Instabilität des Fahrzeugs (V) ohne Änderung der aktuellen Drehmomentverteilung die Flugbahnsteuervorrichtung (DCT) den Überwachungscomputer (CS) anweist ), um die aktuelle Drehmomentverteilung aufrechtzuerhalten, und steuert das Bremssystem (SF), bis die Instabilität verschwunden ist, und autorisiert dann den Überwachungscomputer (CS), eine laufende Änderung der Drehmomentverteilung durchzuführen.

4. Fahrzeug nach einem der Ansprüche 1 bis 3, **dadurch gekennzeichnet, dass** die erste Antriebsmaschine (MM1) eine Wärmekraftmaschine ist.

5. Fahrzeug nach Anspruch 4, **dadurch gekennzeichnet, dass** es eine dritte Antriebsmaschine (MM3) umfasst, die Drehmoment für den ersten Rädersatz (T1) bereitstellt.

6. Fahrzeug nach Anspruch 5, **dadurch gekennzeichnet, dass** die dritte Antriebsmaschine (MM3) eine elektrische Maschine ist, die von einer wiederaufladbaren Batterie (BR) mit elektrischer Energie versorgt wird.

7. Fahrzeug nach einem der Ansprüche 1 bis 6, **dadurch gekennzeichnet, dass** die zweite Antriebsmaschine (MM2) eine elektrische Maschine ist, die von einer wiederaufladbaren Batterie (BR) mit elektrischer Energie versorgt wird.

8. Steuerverfahren für ein Landfahrzeug (V), umfassend mindestens eine erste Antriebsmaschine (MM1), die Drehmoment für einen ersten Radsatz (T1) liefert, eine zweite Antriebsmaschine (MM2), die Drehmoment für einen zweiten Radsatz (T2) liefert, ein Bremssystem (SF), das auf die Räder wirkt, einen Überwachungscomputer (CS), der eine Drehmomentverteilung zwischen dem ersten (T1) und dem zweiten (T2) Zug steuert, und eine Flugbahnsteuervorrichtung (DCT), die das Bremssystem (SF) steuert. , **dadurch gekennzeichnet, dass** es einen Schritt (10-50) umfasst, in dem im Falle der Erkennung einer Instabilität des Fahrzeugs (V) das Trajektoriensteuergerät (DCT) dem Überwachungscomputer (CS) anweist, das aktuelle Drehmoment aufrechtzuerhalten Verteilung im Zustand und steuert das Bremssystem (SF), bis die Instabilität verschwunden ist, und autorisiert dann den Überwachungscomputer (CS), eine Änderung der Drehmomentverteilung durchzuführen.

9. Computerprogrammprodukt, das einen Befehlssatz umfasst, der bei Ausführung durch Verarbeitungsmittel in der Lage ist, das Steuerverfahren nach Anspruch 8 zum Steuern einer Drehmomentverteilung zwischen dem ersten (T1) und dem zweiten (T2) Radsatz eines Landfahrzeugs (V) zu implementieren ) umfassend mindestens eine erste Antriebsmaschine (MM1), die Drehmoment für den ersten Zug (T1) liefert, eine zweite Antriebsmaschine (MM2), die Drehmoment für den zweiten Zug (T2) liefert, ein auf die Räder wirkendes Bremssystem (SF), a einen Überwachungscomputer (CS), der die Drehmomentverteilung steuert, und eine Flugbahnsteuervorrichtung (DCT), die das Bremssystem (SF) steuert.

## Claims

1. Land vehicle (V) comprising at least a first driving machine (MM1) supplying torque for a first train (T1) of wheels, a second driving machine (MM2) supplying torque for a second train (T2) of wheels, a system (SF) acting on said wheels, a supervision computer (CS) controlling a distribution of torque between said first (T1) and second (T2) trains, and a trajectory control device (DCT) controlling said braking system (SF), **characterized in that** in the event of detection of instability of said vehicle (V), said trajectory control device (DCT) orders said supervision computer (CS) to maintain the torque distribution in runs and controls said braking system (SF) until said instability has disappeared, then authorizes said supervision computer (CS) to carry out a torque distribution modification.

2. Vehicle according to Claim 1, **characterized in that** in the event of detection of instability of the said vehicle (V) following an ongoing modification of the said torque distribution, the said trajectory control device (DCT) determines whether the said modification can be continued, and if not, it orders said supervision computer (CS) to maintain the current torque distribution as it is, while if so, it determines a value representative of a modification that can still be made depending of an estimated adhesion variation between said wheels, then orders said supervision computer (CS) to introduce a modification of said current torque distribution defined by said determined value, and in the negative as in the affirmative it checks said braking system (SF) until said instability has disappeared.

3. Vehicle according to Claim 1 or 2, **characterized in that** in the event of detection of instability of the said vehicle (V) in the absence of modification of the current torque distribution, the said trajectory control device (DCT) orders said supervision computer (CS) to maintain said current torque distribution and controls said braking system (SF) until said instability has disappeared, then authorizes said supervision computer (CS) to carry out a modification of said distribution torque in progress.

4. Vehicle according to one of Claims 1 to 3, **characterized in that** the said first driving machine (MM1) is a heat engine.

5. Vehicle according to Claim 4, **characterized in that** it comprises a third driving machine (MM3) providing torque for the said first train (T1) of wheels.

6. Vehicle according to Claim 5, **characterized in that** the said third driving machine (MM3) is an electric machine supplied with electrical energy by a rechargeable battery (BR).

7. Vehicle according to one of Claims 1 to 6, **characterized in that** the said second driving machine (MM2) is an electric machine supplied with electrical energy by a rechargeable battery (BR).

8. Control method for a land vehicle (V) comprising at least a first driving machine (MM1) supplying torque for a first train (T1) of wheels, a second driving machine (MM2) supplying torque for a second train (T2) of wheels, a braking system (SF) acting on said wheels, a supervision computer (CS) controlling a distribution of torque between said first (T1) and second (T2) trains, and a trajectory control device (DCT) controlling said braking system (SF), **characterized in that** it comprises a step (10-50) in which, in the event of detection of instability of said vehicle (V), said trajectory control device (DCT) orders to said supervision computer (CS) to maintain the current torque distribution in the state and controls said braking system (SF) until said instability has disappeared, then authorizes said supervision computer (CS) to carry out a change in torque distribution.

9. Computer program product comprising a set of instructions which, when executed by processing means, is capable of implementing the control method according to claim 8 for controlling a torque distribution between first (T1) and second (T2) wheel sets of a land vehicle (V) comprising at least a first driving machine (MM1) supplying torque for said first train (T1), a second driving machine (MM2) supplying torque for said second train (T2), a braking system (SF) acting on said wheels, a supervision computer (CS) controlling said torque distribution, and a trajectory control device (DCT) controlling said braking system (SF).
